# FASCICULE DE BREVET EUROPEEN

(11) **EP 3 191 688 B1**
(45) Date de publication et mention de la délivrance du brevet: **08.01.2025**
(21) Numéro de dépôt: 15763966.7
(22) Date de dépôt: 03.09.2015
(51) Int. Cl.: F01D 5/14, F01D 5/30, F01D 5/32, F01D 21/04

(54) **AUBE DE SOUFFLANTE**
FAN SCHAUFEL
FAN BLADE

(30) Priorité: 08.09.2014 FR 1458400
(43) Date de publication de la demande: 19.07.2017
(73) Titulaire: SAFRAN AIRCRAFT ENGINES, 75015 Paris (FR)
(72) Inventeur: JABLONSKI, Laurent, F-77550 Moissy Cramayel Cedex (FR); BARDIN, Pierre-Guillaume, F-77550 Moissy Cramayel Cedex (FR); JOLY, Philippe, Gérard, Edmond, F-77550 Moissy Cramayel Cedex (FR)
(74) Mandataire: Ernest Gutmann - Yves Plasseraud S.A.S.
(86) Numéro de dépôt international: PCT/FR2015/052326
(87) Numéro de publication internationale: WO 2016/038280

(56) Documents cités:
- EP-A1- 0 069 620
- WO-A1-2009/144401
- FR-A1- 2 918 409
- FR-A5- 2 175 429
- US-A1- 2011 076 148

## Description

L'invention se rapporte à une aube de soufflante pour turbomachine, telle qu'un turboréacteur ou un turbopropulseur d'avion, ainsi qu'à un rotor de soufflante et une turbomachine ainsi pourvus.

Typiquement, un rotor de turbomachine comporte un disque portant à sa périphérie extérieure des aubes présentant des parties formant des pales aérodynamiques et des pieds engagés dans des rainures de la périphérie extérieur du disque. Ces rainures sont sensiblement axiales (c'est-à-dire sensiblement parallèles à l'axe de rotation du rotor) et disposées circonférentiellement en alternance avec des dents du disque. Les aubes sont maintenues radialement sur le disque par coopération de formes de leurs pieds avec les rainures, et donc les dents, du disque, les pieds des aubes étant par exemple du type en queue d'aronde.

Une fois l'aube en place dans la rainure correspondante du disque, il est connu d'interposer une cale entre le pied de chaque aube et le fond de la rainure, pour immobiliser radialement l'aube dans cette rainure. Typiquement, chaque cale comporte à son extrémité amont un becquet qui s'étend radialement vers l'extérieur et qui présente une face radiale aval formant un appui axial d'une face radiale amont du pied d'aube, pour retenir l'aube axialement vers l'amont. Du fait de forces de cisaillement importantes en direction axiale pendant la transmission de certains efforts, il a été proposer de sur-dimensionner le becquet en direction axiale pour qu'il puisse résister à ces forces, ce qui se traduit par un encombrement axial important de chaque becquet, et une augmentation de la masse du rotor de la soufflante.

Pour compenser le surdimensionnement en direction axiale du becquet d'une cale, il est possible de rogner d'autant l'extrémité amont du pied d'aube correspondant. Cependant, cette solution n'est pas satisfaisante car dans ce cas le pied d'aube a une dimension axiale plus courte que celle de la rainure du disque et vient exercer des forces de contact importantes dans les parois latérales de la rainure qui peuvent entraîner une usure prématurée de celles-ci.

FR 2 918 409 A1, FR 2 175 429 A5 et EP 0 069 620 A1 divulguent des exemples des aubes de soufflante.

Le problème se posant en particulier sur un rotor de soufflante, c'est dans ce cadre que WO2009/144401 a présenté une solution visant à réduire les forces de cisaillement appliquées sur le becquet de la cale, en particulier en cas de perte d'une aube de soufflante.

Cette solution prévoit que le becquet de chaque cale comporte une face aval de butée sur laquelle s'appuie l'extrémité amont du pied d'aube en cas d'effort violent, cette face aval de butée étant oblique par rapport à l'axe de rotation du rotor.

Ainsi, dans cette association de cales et d'aubes, les aubes sont prévues pour travailler davantage qu'antérieurement et on ne réduit pas les contraintes dans celles-ci. Le flux des contraintes ne se répartit pas entre la cale et l'aube. Autrement dit, dans la répartition du flux de contraintes généré par l'aube, la solution de WO2009/144401 est un montage en série où le flux des contraintes passe par l'aube puis par la cale, avec des contraintes élevées dans l'aube.

Par ailleurs, US2011/0076148 propose, sur une aube de turbomachine, de conformer de manière particulière notamment la plateforme intérieure inter-aubes qui est située radialement entre le pied et la pale. Mais ceci impose justement des contraintes de forme qui peuvent être limitantes.

Sans recourir à ces options, l'invention a notamment pour but d'apporter une solution simple, efficace et économique à l'inconvénient précité, grâce à une excroissance amont et/ou aval des pieds d'aubes qui augmente la longueur axiale de portée.

Elle propose plus précisément une aube de soufflante pour une turbomachine selon la revendication 1, ou un ensemble selon la revendication 7. D'autres modes de réalisation sont proposés dans les revendications dépendantes 2-6 et 8-12 ci-jointes.

Par ce ou ces décrochement(s), une limitation de la masse des aubes, point critique sur de tels ensembles rotatifs, est visée.

En outre, par une telle portée amont et/ou aval augmentée, l'intention est de faire travailler l'avant (amont) et/ou l'arrière du pied d'aube et donc de répartir le flux de contraintes sur une plus grande zone, en diminuant corrélativement la contrainte moyenne et locale.

En augmentant ainsi axialement la longueur de la portée du pied, le flux de contraintes va se répartir dans ce becquet et dans le reste de la portée, vers l'aval.

Il ne s'agit plus d'un montage en série comme dans WO2009/144401, mais d'un montage en parallèle ; on réduit donc les contraintes locales.

A toutes fins, il est précisé que, sur une aube de soufflante, la portée est la zone du pied d'aube qui est en contact avec les dents du disque qui le reçoit, alors que le pied est engagé dans la rainure de ce disque. La longueur axiale de portée du pied d'aube est par conséquent, parallèlement à l'axe de rotation du rotor ou perpendiculairement à la direction radiale d'allongement de l'aube, la longueur suivant laquelle le pied est en contact latéralement avec les dents du disque. La zone d'échasse d'une aube étant conventionnellement la zone située radialement entre l'extrémité radialement intérieure de la pale - là où sont disposées les plates-formes intérieures - et le pied, donc intérieurement par rapport à la limite radialement intérieure que définissent ces plates-formes intérieures pour un flux d'écoulement de gaz à faire circuler dans la turbomachine, ceci participera à la diminution des contraintes dans l'échasse, coté amont.

En conformant cette zone d'échasse avec un bord amont, respectivement aval, de forme concave avançant vers l'amont, respectivement évoluant vers l'aval, du pied vers la pale, on fera par ailleurs non seulement transiter le flux de contrainte par une section importante pour diminuer la contrainte locale dans l'échasse, mais on permettra aussi au flux de contraintes de diffuser le plus possible par la zone de contact amont.

Donner une forme rayonnante (avec un rayon) à la forme concave du raccordement, le long du bord amont, respectivement aval, de la zone d'échasse, entre les plates-formes intérieures et le pied, favorisera encore davantage, par son arrondi, la diffusion précitée du flux de contraintes.

A noter qu'une portée axiale du pied allongée vers l'amont, respectivement l'aval, sera d'autant plus utile si, radialement vers extérieur au-delà d'une forme d'abord concave, le bord d'attaque, respectivement de fuite, de la pale présente une forme convexe, qui, par rapport à une droite parallèle à la direction radiale d'allongement de l'aube et passant par l'extrémité amont du pied, s'avance jusqu'en amont, respectivement recule jusqu'en aval, de cette droite.

Si, comme conseillée, ladite forme convexe de pale est plus ventrue au bord d'attaque qu'au bord de fuite (L4>L5 ci-après), le centre de gravité de l'aube (au moins dans sa partie pale) sera alors a priori plus près du bord d'attaque que du bord de fuite. La portée axiale du pied allongée participera à la stabilité de l'aube et évitera que naturellement son poids l'entraîne à basculer vers l'amont à l'arrêt et plutôt vers l'arrière (aval) lors de la rotation de la soufflante.

Par ailleurs, pour optimiser à la fois l'effet mécanique recherché et le poids de l'aube, on pourra préférer que l'aube présente :
- une portée qui, suivant ladite direction radiale d'allongement de l'aube, s'évase vers une extrémité libre (radialement intérieure),
- avec, suivant cette direction, une distance (R) entre la naissance de la portée et l'extrémité libre,
- et, perpendiculairement à ladite direction radiale d'allongement, une distance (L) entre l'extrémité amont du pied et soit ladite extrémité radialement intérieure du bord d'attaque de la pale, soit l'extrémité aval dudit décrochement de la zone de liaison entre la pale et le pied,
- avec L inférieur ou égal à 2R.

Quant au fait de prévoir, toujours sur le côté amont, que le bord d'attaque de la pale se raccorde à son extrémité radialement intérieure par une forme concave, ceci permettra d'éviter une avancée vers l'amont trop prononcée du pied, voire de favoriser certains aspects aérodynamiques.

En prévoyant par ailleurs :
- que le pied d'une (de chaque) aube présente radialement vers l'intérieur, un bord d'extrémité axial parallèle à l'axe de la rainure du disque qui le reçoit, et
- que du côté amont, l'extrémité amont du pied définisse une face d'extrémité amont qui est perpendiculaire à l'axe suivant lequel s'étend ledit bord d'extrémité axial du pied,
on assurera un appui axial franc, de face, à l'extrémité amont de ce pied.

Pour favoriser encore davantage la limitation de masse des aubes, il est aussi proposé que l'extrémité amont, respectivement aval du pied se raccorde, de façon radialement extérieure au bord amont, respectivement aval d'une partie radialement intérieure de ladite zone de liaison entre le pied et la plateforme intérieure inter-aubes, par ledit décrochement vers l'aval, respectivement l'amont, de sorte que, transversalement à ladite direction radiale, l'extrémité amont, respectivement aval du pied soit située plus en amont, respectivement aval que ledit bord amont, respectivement aval de ladite zone de liaison, sur toute sa longueur.

Si nécessaire, l'invention sera encore mieux comprise et d'autres détails, caractéristiques et avantages de celle-ci apparaîtront encore plus clairement à la lecture de la description qui suit faite à titre d'exemple non limitatif et en référence aux dessins annexés, dans lesquels :
- la figure 1 est une vue schématique partielle en coupe axiale (sauf l'aube qui est vue de côté) d'un rotor de soufflante d'une turbomachine selon la technique antérieure,
- la figure 2 est une vue schématique partielle de côté d'une aube de rotor de soufflante d'une turbomachine selon la présente invention,
- la figure 3 est une vue schématique à plus grande échelle d'une partie de la figure 2,
- la figure 4 est une schématique partielle de côté d'une alternative d'aube selon la présente invention,
- la figure 5 est une vue schématique partielle en coupe axiale (sauf l'aube qui est vue de côté) d'un rotor de soufflante pourvue d'aubes chacune comme celle de la figure 4,
- la figure 6 est une coupe locale, suivant la ligne VI-VI de la figure 3 et
- les figures 7, 8 schématisent deux types d'aubes et deux montages possibles.

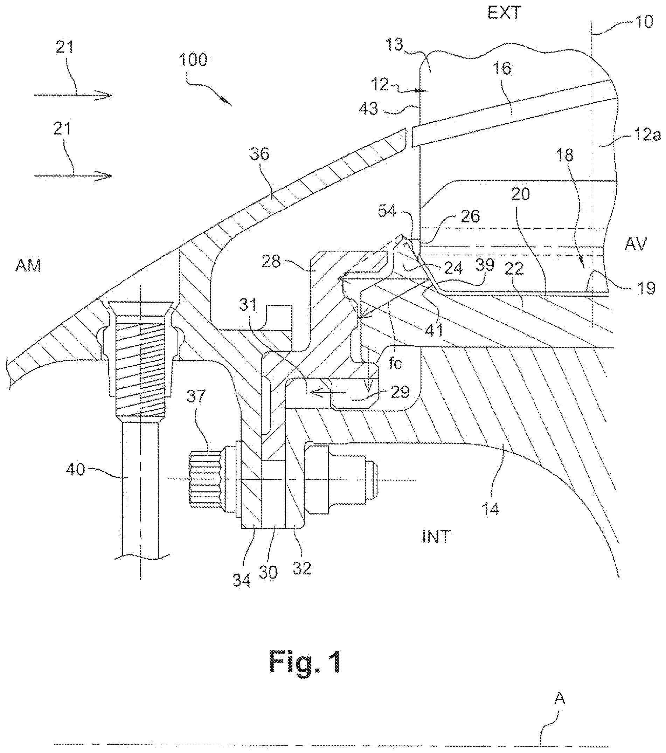

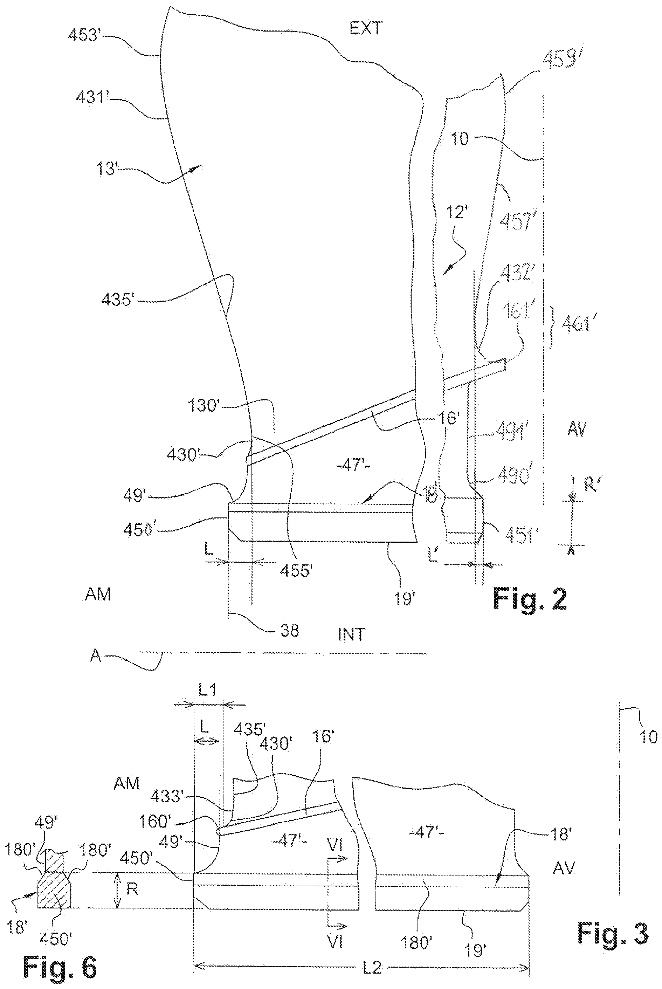

En liaison avec la figure 1, les aubes 12, dont seule l'une est représentée, correspondent à une solution de la technique antérieure. Ainsi, l'aube 12' des figures 2,3 pourrait être substituée à chaque aube 12 et les autres pièces présentées du rotor pourraient être réutilisées afin de mettre en œuvre l'invention.

Sur le rotor de soufflante 100, les aubes 12 sont portées par un disque 14 et entre ces aubes sont intercalées des plates-formes inter-aubes 16. Le disque 14 est fixé à l'extrémité amont d'un arbre non représenté de la turbomachine.

En l'espèce, les plates-formes inter-aubes 16, qui sont à disposer, circonférentiellement (autour de l'axe A), bout à bout avec des plates-formes intérieures d'aubes adjacentes, de manière à ce qu'elles définissent ensemble une limite radialement intérieure et circonférentielle pour un flux d'écoulement de gaz (veine 21) à faire circuler dans la turbomachine, sont chacune monoblocs avec le reste de l'aube (pale, échasse et pied) qui les porte ; toutefois, il pourrait s'agir de plates-formes rapportées s'étendant latéralement jusqu'à proximité immédiate de chaque face latérale, telle celle 12a.

Chaque aube de soufflante 12 comprend une pale 13 raccordée à son extrémité radialement intérieure à un pied 18 qui est engagé dans une rainure 20 sensiblement axiale de forme complémentaire du disque 14 permettant de retenir radialement cette aube sur le disque.

Les expressions :
- radiale et axiale se réfèrent respectivement à la direction 10 d'allongement de l'aube et à l'orientation de la rainure 20 où est engagé le pied 18 (parallèlement à l'axe A de rotation du rotor), étant précisé que le pied présente (radialement vers l'intérieur) un bord intérieur d'extrémité 19 axial (ou extrémité libre radialement intérieure) à engager parallèlement à l'axe de la rainure 20,
- intérieur et extérieur (voir respectivement EXT et INT figures 1,2) se réfèrent à la position le long de la direction 10 d'allongement de l'aube ; le pied 18 est vers l'intérieur, la pale 13 plus vers l'extérieur,
- amont et aval (voir respectivement AM et AV figures 1-3) se réfèrent à la position le long de la direction axiale A,

Ainsi, sur le rotor, les pieds 18 sont engagés axialement et retenus radialement dans des rainures, ou alvéoles, de la périphérie extérieure du disque, ces rainures étant disposées en alternance avec des dents du disque.

Une cale 22 est interposée entre le pied 18 de chaque aube et le fond de la rainure 20 correspondante du disque pour immobiliser radialement l'aube dans la rainure. Chaque cale 22 est formée d'une barre allongée portant à son extrémité amont un becquet 24 qui s'étend radialement vers l'extérieur.

Le becquet 24 est, en position de montage représentée en figure 1, en appui axial sur une face radiale 26 de l'extrémité amont du pied d'aube 18 pour retenir l'aube axialement vers l'amont sur le disque 14.

Un flasque annulaire 28 est fixé coaxialement sur l'extrémité amont du disque, 14, la périphérie extérieure de ce flasque 28 s'étendant en amont des becquets des cales 22. Le flasque 28 est retenu sur le disque 14 par des dents de crabot 29, 31, le flasque 28 comportant de plus à sa périphérie intérieur une bride annulaire 30 qui est intercalée entre une bride annulaire amont 32 du disque 14 et une bride annulaire intérieur 34 d'un capot 36 agencé en amont du disque 14 et des aubes 12. Les brides 30, 32 et 34 comprennent des orifices axiaux de passage de vis 37 ou analogues pour le serrage des brides entre elles. Vers son extrémité radialement intérieure, la face radiale 26 du pied 18 est chanfreinée et comporte donc une face d'extrémité amont oblique 39 prévue pour venir s'appuyer contre une face oblique sensiblement parallèle 41 du becquet 24 de la cale, en particulier en cas de perte ou de rupture d'une des aubes de soufflante 12.

La face 39, qui s'étend de manière oblique par rapport à l'axe A de la soufflante, relie donc la face radiale amont 26 du pied 18 à son bord axial 19 radialement intérieur.

Pour appropriée qu'elle soit, cette réalisation apporte une solution en particulier en cas de perte ou de rupture d'aube. Or, l'invention vise d'abord à prendre en compte la gestion des flux de contraintes en fonctionnement opérationnel courant, normal, donc sans perte d'aube, lorsque ces flux de contraintes sont globalement suivant l'axe 10, et dirigés de l'aube vers le disque. L'objectif est de les diminuer, en particulier dans la zone de liaison entre la pale et le pied.

C'est notamment dans ce but que les solutions des figures 2 à 4 proposent, conformément à l'invention, une aube 12', respectivement 12", dans laquelle l'extrémité amont 450', respectivement 450", du pied 18', respectivement 18", se raccorde à une extrémité radialement intérieure 430', respectivement 430", du bord d'attaque de la pale 13', respectivement 13", par le bord amont d'une zone de liaison présentant un décrochement vers l'aval 49',49", de sorte que ladite extrémité radialement intérieure du bord d'attaque 431', respectivement 431", de la pale est située plus en aval que l'extrémité amont (450',450") du pied.

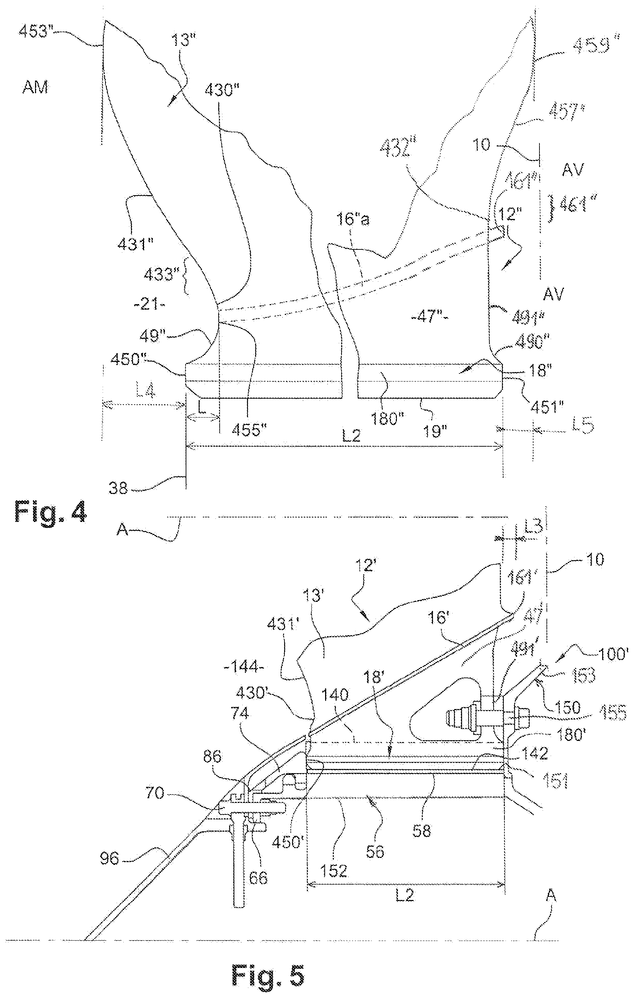

Ainsi, lorsque, comme figure 5, l'aube est engagée dans la rainure 58 du disque 56, une sur-longueur L de portée formant un becquet, ou une excroissance, est disponible, axialement (parallèlement à l'axe A) pour la répartition des flux de contraintes, en particulier rotor en fonctionnement normal.

Pour l'explicitation du propos, L2 marque, sur les figures 3 à 5, la longueur de portée de l'aube, soit la longueur qui, perpendiculairement à la direction d'allongement 10, et parallèlement à l'axe A, s'étend entre les extrémités amont et aval (respectivement 450" et 451" figure 4) du pied d'aube considéré, ce pied étant, sur toute cette longueur et une fois monté, contenu à l'intérieur de la rainure 58 du disque 56 comme illustré figure 5 pour l'aube 12'.

Ci-après, on se réfère à la solution des figures 2,3, mais celle de la figure 4 est aussi concernée. Il suffit de remplacer le prime (') par le double prime ("). Précisément, le long de l'axe A, l'extrémité amont 450' du becquet est située davantage vers l'amont que ne l'est l'extrémité amont 160' des plates-formes intérieures latérales 16', cette extrémité amont 160' correspondant à celle de la zone d'échasse 47' à l'endroit de son raccordement amont avec la base de la pale, dans l'hypothèse de plates-formes 16' rapportées.

On aura compris que cette position en amont s'apprécie le long de l'axe A de rotation du rotor, ou parallèlement au bord d'extrémité axial rectiligne 19' que, comme précédemment, le pied 18' de l'aube 12' présente (radialement vers l'intérieur) et qui est à engager dans la rainure axiale du disque concerné.

Ce qui a été prévu ci-dessus à l'amont pourrait l'être à l'aval, ou à l'amont et à l'aval pour allonger encore la longueur L2 de portée.

Ainsi, pour l'aval, a-t-on prévu sur les mêmes figures que l'extrémité aval 451',451" du pied se raccorde à une extrémité radialement intérieure du bord de fuite 457',457" de la pale par le bord aval d'une zone de liaison (ou échasse ; 47',47") radialement intermédiaire entre le pied et la plateforme intérieure inter-aubes 16',16"(qu'elle soit monobloc ou non avec l'aube), en présentant un décrochement vers l'amont 490',490", de sorte que ladite extrémité radialement intérieure dudit bord de fuite (432' figure 2) de la pale soit située plus en amont que l'extrémité aval du pied (451' figure 2).

En faisant ainsi transiter le flux de contraintes par une section importante, on diminuera donc la contrainte locale dans l'échasse.

A ce sujet, pour faciliter la diffusion des efforts précités jusqu'au bout (amont ; AM) de la portée, les figures 2 et 3 montrent l'intérêt de prévoir que la zone d'échasse 47' située radialement entre les plates-formes intérieures 16' et le pied 18' (donc intérieurement par rapport à la veine d'air délimitée par ces plates-formes, une fois l'aube 12' montée), se raccorde au pied, à son bord amont, par une forme concave donnée au décrochement 49' ou 49".

Prévoir qu'une telle forme concave soit rayonnante (définie par un rayon) facilitera encore davantage la diffusion des efforts, en évitant les angles.

Pour un bon appui axial, il est recommandé qu'à extrémité la plus en amont, le pied présente une face d'extrémité amont 450' orientée perpendiculairement à l'axe suivant lequel s'étend le bord d'extrémité axial 19'.

Par ailleurs, pour favoriser l'équilibre des aubes, il est recommandé qu'à l'amont et l'aval, les zones les plus ventrues de la pale respectivement au bord d'attaque et au bord de fuite (453',453" et 459',459", respectivement; figures 2, 4) soient situées respectivement en amont et en aval desdites extrémités respectivement amont et aval du pied : distance axiale L4 et L5 figure 4.

Pour l'équilibre d'ensemble, il est recommandé que L4>L5.

Et pour limiter encore la masse des aubes, l'extrémité aval 451',451" du pied se raccordera favorablement, de façon radialement extérieure, au bord aval 491',491" de la partie radialement intérieure de la zone d'échasse 47',47" par un décrochement vers l'amont 490',490".

Ainsi, transversalement à ladite direction radiale 10 de l'aube, ici suivant l'axe A, l'extrémité aval 451',451"du pied sera située plus en aval que ledit bord aval 491',491" auquel cette extrémité aval se raccorde.

A nouveau pour l'équilibrage général de l'aube et un guidage performant du flux d'air par les plateformes intérieures, telles que 16',16", il est même proposé que l'extrémité aval 161',161" de chacune de ces plateformes soit située plus en aval que ladite extrémité aval du pied, ceci suivant l'axe A, donc transversalement à ladite direction radiale d'allongement 10 de l'aube concernée (voir distance L3, figure 5).

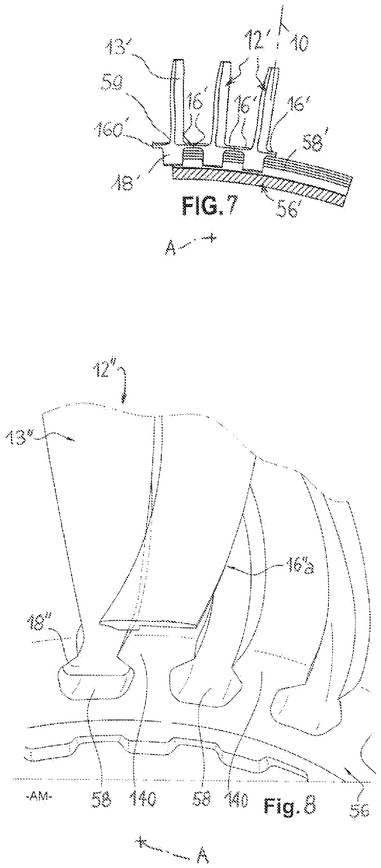

La figure 7 montre la disposition des plates-formes 16' des aubes 12' dont les pieds 18' sont maintenus, autour de l'axe A, dans une rainure circonférentielle 58" du disque 56'. Chaque plateforme 16', monobloc avec la pale, s'étend essentiellement en direction axiale et circonférentielle, tout autour de la pale, transversalement à l'axe 10 considéré. Un rayon 59 définit une partie de liaison entre la pale 13' et la plateforme 16' concernée, en présentant une face extérieure de transition progressive à profil concave. Ainsi montées, les plateformes viennent en butées les unes contre les autres deux à deux par leur face d'extrémité circonférentielle 160'.

Figure 4, l'aube est sans plate-forme intérieure monobloc. Chaque plate-forme intérieure (dont l'une 16"a est montrée par transparence) est rapportée, disposée latéralement entre deux aubes circonférentiellement successives et fixée au disque pour que soit encore limitée intérieurement la veine 21.

Ainsi, dans cette version, y-a-t'il, sur l'aube, radialement, un raccordement direct entre l'échasse 47" et la pale.

Figure 8, on voit mieux que les plates-formes sont rapportées : celle schématisée 16" s'étend circonférentiellement entre un couple d'aubes 12", dont seule l'une est figurée, avec son pied 18" retenu dans l'une des rainures 58 du disque 56 formée entre deux nervures 140 circonférentiellement successives autour de l'axe A.

Ceci n'empêche pas que le bord d'attaque 431" de la pale se raccorde à son extrémité radialement intérieure 430" par une forme concave 433".

Figure 3, ceci est encore plus net : la forme concave 433' correspondante est même en retrait vers l'aval par rapport à la position axiale de la forme concave 49' que présente le bord amont de la zone de liaison entre la pale et le pied (distance axiale L1).

A ce sujet, et qu'il s'agisse d'une aube à plateforme intérieure intégrée ou non, il sera donc avantageux (notamment pour la masse, mais aussi pour l'équilibrage, si les formes créées sont différentes à l'amont et à l'aval), qu'à l'amont et/ou à l'aval, l'extrémité amont, respectivement aval, du pied se raccorde, de façon radialement extérieure au bord amont, respectivement aval, d'une partie radialement intérieure de ladite zone 47',47" de liaison entre le pied et la plateforme intérieure inter-aubes (16' ou 16"), par ledit décrochement vers l'aval, respectivement l'amont, de sorte que, transversalement à ladite direction radiale 10, l'extrémité amont, respectivement aval, du pied soit située plus en amont, respectivement plus en aval, que ledit bord amont, respectivement aval, de ladite zone de liaison, ceci (radialement) sur toute sa longueur de cette zone (donc depuis le raccordement au pied jusqu'au niveau de la plateforme intérieure).

Autre point commun entre les versions illustrées : radialement vers l'extérieur (axe 10) et au-delà de la forme concave 433',433", le bord d'attaque 431',431" de la pale présente une forme convexe 435',435".

Ceci se voit le plus nettement figure 2.

Par contre, sur la version de la figure 4 d'aube sans plateforme intégrée, on ne retrouve pas en 461" la forme concave 461' que présente de préférence, dans la version à plateforme intégrée (figure 2), le raccordement de l'extrémité radialement intérieure du bord de fuite de la pale avec la plateforme. Radialement, entre la plateforme 16"a et la zone 459" la plus ventrue (vers l'aval) de la pale au bord de fuite, la forme de ce bord de fuite demeure malgré globalement tout concave

Combiner ces formes successivement concaves puis convexes le long du bord d'attaque de la pale, avec un raccordement au décrochement vers l'aval (49',49") de la forme concave (433',433"), permettra de gérer finement l'équilibre à trouver entre la sur-longueur L de portée axiale (parallèlement à l'axe A), la position axiale du centre de gravité de l'aube (important notamment pour ses équilibres statique et dynamique, rotor en rotation) et les exigences de performance aérodynamique.

Figures 3 et 6 notamment, on notera encore qu'en liaison avec ce point, il est conseillé :
- que, suivant ladite direction radiale 10 d'allongement de l'aube concernée, sa zone de portée s'évase vers une extrémité libre, telle 19' figure 3,
- avec, suivant cette direction, une distance R entre la naissance de la portée (180',180" figures 3,4) et l'extrémité libre (19' ou 19"),
- et, perpendiculairement à ladite direction radiale 10 d'allongement, une distance L entre l'extrémité amont du pied et soit ladite extrémité radialement intérieure (455',455" figures 2,4) du bord d'attaque de la pale, soit l'extrémité aval du décrochement (49',49") de ladite zone de liaison entre la pale et le pied (voir figure 3),
- où L sera inférieur ou égal à 2R.

La même considération et donc le respect du rapport ci-dessus peut utilement être prévu à l'aval, avec alors L'inférieure ou égale à 2R'. La dimension R' (hauteur du pied à l'aval, suivant l'axe 10) sera (fig.3) ou non (voir fig.2) égale à R. Une hauteur R'> R favorisera une butée arrière favorable du pied, comme schématisé figure 5.

L'une comme l'autre les aubes 12',12" pourraient être installées sur le rotor 100' montré figure 5.

Le disque 56 y est agencé autour de l'axe A de la turbomachine, et est entrainé en rotation par un arbre d'entrainement aval (non représenté).

Des aubes, dont celle 12' déjà présentée, entre lesquelles sont intercalées des plates-formes inter-aubes 16', sont portées par le disque 56.

Le pied 18' de chaque aube est engagé dans une rainure 58 sensiblement axiale du disque 56, formée entre deux dents ou nervures 140 du disque, et permettant de retenir radialement cette aube sur le disque 56.

Le rotor 100' est en outre équipé de moyens de retenue axiale vers l'amont des aubes sur le disque. Ceux-ci comportent un flasque 74 monté dans la gorge annulaire du disque 56 et formant un appui axial des pieds des aubes. Le flasque 74 est immobilisé en rotation au moyen d'un anneau 86 comportant une partie cylindrique délimitée par des faces cylindriques interne et externe. La partie cylindrique de l'anneau est en appui axial par l'extérieur contre une bride 66 du disque. La bride 66 comporte, régulièrement répartis sur toute sa circonférence, des trous axiaux de passage de vis 70. Le flasque 74 est immobilisé en rotation par butée de ses parties pleines contre des saillies de l'anneau. Un capot 96, par exemple en aluminium et de forme conique, est fixé sur le disque.

Les aubes 12' de soufflante sont retenues axialement dans les rainures 58 du disque 56 par l'intermédiaire des moyens 70,74, 86, 96 ci-dessus agencés donc en amont des aubes.

Une cale 142 est intercalée entre le pied 18' de chaque aube et le fond de la rainure 58 correspondante du disque 56 pour immobiliser radialement l'aube sur le disque 56.

Les plates-formes 16' inter-aubes forment toujours une paroi qui délimite intérieurement la veine 144 du flux d'air entrant dans la turbomachine, et comprennent des moyens qui coopèrent avec des moyens correspondants prévus sur le disque 56, entre les rainures 58, pour fixer les plates-formes sur le disque.

Le compresseur basse pression, BP, 150 est ici agencé en aval du disque 56 de soufflante et directement en appui contre les extrémités aval des pieds 18' d'aubes et des nervures 140 du disque. Il n'existe donc pas de contrainte de profondeur radiale des nervures liée à l'engagement de crochets aval. L'appui axial du compresseur BP 150 est ici réalisé par une patte radiale 151 de l'extrémité amont du bras annulaire amont 153 d'un anneau labyrinthe aval. Une fixation axiale, typiquement boulonnée, 155, pourra compléter l'appui ci-dessus, radialement juste à l'extérieur, entre la patte radiale 151 et la zone d'échasse, ici 47' (voir figure 5).

Le profil de la paroi interne 152 du disque 56 pourra être tronconique s'évasant vers l'aval.

## Revendications

1. Aube de soufflante pour une turbomachine, telle qu'un turboréacteur ou un turbopropulseur d'avion, l'aube (12',12') ayant un côté amont et un côté aval et présentant, suivant une direction radiale (10) d'allongement de l'aube :
- une pale (13',13") ayant un bord d'attaque le long du côté amont et un bord de fuite le long du côté aval,
- un pied (18',18") à engager dans une rainure d'un disque de la turbomachine, le pied étant situé radialement plus à l'intérieur que la pale et présentant des extrémités amont et aval, transversalement à ladite direction radiale (10) d'allongement,
- une plateforme intérieure inter-aubes (16) située radialement entre le pied (18',18") et la pale (13',13"),
sur laquelle aube, une extrémité amont (450',450") du pied se raccorde à une extrémité radialement intérieure du bord d'attaque (431',431") de la pale par un bord amont d'une zone de liaison (47',47") qui :
-- est radialement intermédiaire entre le pied (18',18") et la plateforme intérieure inter-aubes (16',16", 16a"), et
-- présente un décrochement vers l'aval (49',49"),
de sorte que ladite extrémité radialement intérieure (430',430") du bord d'attaque de la pale est située plus en aval que l'extrémité amont du pied, le bord amont de ladite zone (47',47") de liaison présentant une forme concave qui avance vers l'amont depuis la pale vers le pied, et
le bord aval de ladite zone (47',47") de liaison présentant une forme concave et/ou qui recule vers l'aval, depuis la pale vers le pied,
**caractérisée en ce que :**
- le bord d'attaque (431',431") et le bord de fuite (457',457") de la pale se raccordent à ladite plateforme (16',16",16a"), chacune en extrémité radialement intérieure, par une forme concave (433',433" ; 432'),
- radialement vers l'extérieur, au-delà de la forme concave (433',433"), le bord d'attaque (431',431") et le bord de fuite (457',457") de la pale présentent chacun une forme convexe, et
- la forme convexe du bord d'attaque (453',453") de la pale est plus ventrue que celle (459',459") du bord de fuite de la pale.

2. Aube selon la revendication 1, dans laquelle l'extrémité aval (451',451") du pied se raccorde à l'extrémité radialement intérieure du bord de fuite (457',457") de la pale par le bord aval de la zone de liaison (47',47") qui présente un décrochement vers l'amont (490',490"), de sorte que l'extrémité radialement intérieure (430',430") du bord de fuite (432') de la pale est située plus en amont que l'extrémité aval du pied.

3. Aube selon la revendication 1 ou 2, dans laquelle le bord amont de la zone (47',47") de liaison entre la pale et le pied présente une forme qui présente un rayon.

4. Aube selon l'une des revendications précédentes, dans laquelle :
- la zone la plus ventrue de la pale, au bord d'attaque, est située en amont de l'extrémité amont du pied, et
- la zone la plus ventrue de la pale, au bord de fuite, est située en aval de l'extrémité aval du pied.

5. Aube selon l'une des revendications précédentes présentant :
- une portée (180',180") qui, suivant ladite direction radiale (10) d'allongement de l'aube, s'évase vers une extrémité libre (19'),
- avec, suivant cette direction, une distance (R) entre la naissance de la portée (180',180") et l'extrémité libre (19'),
- et, perpendiculairement à ladite direction radiale (10) d'allongement, une distance L entre l'extrémité amont (450',450") du pied (18',18") et soit ladite extrémité radialement intérieure (430',430") du bord d'attaque de la pale, soit l'extrémité aval du décrochement (49',49") de ladite zone de liaison entre la pale (13',13") et le pied (18',18"), avec L inférieur ou égal à 2R.

6. Aube selon l'une des revendications précédentes, **caractérisée en ce que** l'extrémité amont, respectivement aval (451',451"), du pied se raccorde, de façon radialement extérieure, au bord amont, respectivement aval (491',491"), d'une partie radialement intérieure de ladite zone (47',47") de liaison entre le pied (18',18") et la plateforme intérieure inter-aubes (16',16",16a"), par ledit décrochement vers l'aval (49',49"), respectivement l'amont (490',490") de sorte que, transversalement à ladite direction radiale (10), l'extrémité amont, respectivement aval du pied est située plus en amont, respectivement aval que ledit bord amont, respectivement aval (491',491") de ladite zone (47',47") de liaison, sur toute sa longueur.

7. Ensemble comprenant :
- des aubes de soufflante de turbomachine, telle qu'un turboréacteur ou un turbopropulseur d'avion, chaque aube (12') ayant un côté amont et un côté aval et présentant, suivant une direction radiale (10) d'allongement de l'aube :
-- une pale (13") ayant un bord d'attaque le long du côté amont et un bord de fuite le long du côté aval,
-- et un pied (18") à engager dans une rainure d'un disque de la turbomachine, le pied étant situé radialement plus à l'intérieur que la pale et présentant une extrémité amont,
- des plateformes intérieures inter-aubes (16',16",16a") interposées chacune entre deux dites aubes successives, radialement en face d'un niveau d'une zone de liaison (47") de chaque aube radialement intermédiaire entre le pied (18") et la pale (13") et, sur chacune desquelles aubes, une extrémité amont (450") du pied se raccorde à une extrémité radialement intérieure du bord d'attaque (431") de la pale par un bord amont de la zone de liaison (47") qui :
-- est radialement intermédiaire entre le pied (18") et la plateforme intérieure inter-aubes (16',16",16a"),
-- présente un décrochement vers l'aval (49"),
de sorte que ladite extrémité radialement intérieure (430") du bord d'attaque de la pale est située plus en aval que l'extrémité amont du pied, le bord amont de ladite zone (47") de liaison présentant une forme concave qui avance vers l'amont depuis la pale vers le pied, et
le bord aval de ladite zone (47") de liaison présentant une forme concave et/ou qui recule vers l'aval, depuis la pale vers le pied,
**caractérisé en ce que**, sur chaque aube :
- le bord d'attaque (431") et le bord de fuite (457") de la pale se raccordent, chacune en extrémité radialement intérieure, par une forme concave (433"),
- radialement vers l'extérieur, au-delà de la forme concave (433"), le bord d'attaque (431") et le bord de fuite (457") de la pale présentent chacun une forme convexe, et
- la forme convexe du bord d'attaque (453") de la pale est plus ventrue que celle (459") du bord de fuite de la pale.

8. Ensemble selon la revendication 7, dans lequel l'extrémité aval (451") du pied se raccorde à l'extrémité radialement intérieure du bord de fuite (457") de la pale par le bord aval de la zone de liaison (47") qui présente un décrochement vers l'amont (490"), de sorte que l'extrémité radialement intérieure (430") du bord de fuite (432') de la pale est située plus en amont que l'extrémité aval du pied.

9. Rotor de soufflante pour une turbomachine, le rotor comprenant un disque (14,56) ayant un axe de rotation et présentant en périphérie extérieure des rainures (20,58) sensiblement axiales où sont disposés des pieds (18',18") d'aubes, chacune de ces aubes étant selon l'une des revendications 1 à 6 ou selon l'ensemble de la revendication 7 ou 8.

10. Rotor selon la revendication 9, où chaque plates-forme intérieure (16',16",16a") présente une extrémité amont et s'étend latéralement de part et d'autre d'une pale, de manière à ce que les plates-formes définissent ensemble une limite radialement intérieure pour un flux (21,144) d'écoulement de gaz à faire circuler dans la turbomachine, l'extrémité amont (450',450") du pied de chaque aube étant située davantage vers l'amont que ne l'est l'extrémité amont (160') de chaque plateforme intérieure.

11. Rotor selon la revendication 9 ou 10, dans laquelle :
- le pied d'une aube présente radialement vers l'intérieur, un bord d'extrémité axial (19',19") parallèle à l'axe de la rainure (20,58) qui le reçoit, et
- du côté amont, l'extrémité amont (450',450") du pied définit une face d'extrémité amont qui est perpendiculaire à l'axe suivant lequel s'étend ledit bord d'extrémité axial du pied.

12. Turbomachine, telle qu'un turboréacteur ou un turbopropulseur d'avion, **caractérisée en ce qu'**elle comprend plusieurs aubes selon l'une des revendications 1 à 6, ou l'ensemble de la revendication 7 ou 8, ou le rotor de soufflante (100,100') selon l'une des revendications 9 à 11.

## Patentansprüche

1. Bläserschaufel für ein Turbotriebwerk, wie ein Turbostrahltriebwerk oder ein Turboproptriebwerk für Flugzeuge, wobei die Schaufel (12', 12') eine stromaufwärtige Seite und eine stromabwärtige Seite hat und entlang einer radialen Erstreckungsrichtung (10) der Schaufel aufweist:
- ein Schaufelblatt (13', 13") mit einer Vorderkante entlang der stromaufwärtigen Seite und einer Hinterkante entlang der stromabwärtigen Seite,
- einen Schaufelfuß (18', 18") zum Eingriff in eine Nut einer Scheibe des Turbotriebwerks, wobei der Schaufelfuß radial weiter innen als das Schaufelblatt angeordnet ist und ein stromaufwärtiges und ein stromabwärtiges Ende quer radialen Erstreckungsrichtung (10) aufweist,
- eine innere Zwischenschaufelplattform (16), die radial zwischen dem Schaufelfuß (18', 18") und dem Schaufelblatt (13', 13") angeordnet ist, wobei bei der Schaufel ein stromaufwärtiges Ende (450', 450") des Schaufelfußes an ein radial inneres Ende der Vorderkante (431', 431") des Schaufelblattes anschließt, und zwar über eine stromaufwärtige Kante eines Verbindungsbereichs (47', 47"), der
-- radial zwischen dem Schaufelfuß (18', 18") und der inneren Zwischenschaufelplattform (16', 16", 16a") liegt und
-- einen stromabwärts gerichteten Absatz (49', 49") aufweist,
so dass das radial innere Ende (430', 430") der Vorderkante des Schaufelblatts weiter stromabwärts liegt als das stromaufwärtige Ende des Schaufelfußes, wobei die stromaufwärtige Kante des Verbindungsbereichs (47', 47") eine konkave Form aufweist, die in Richtung stromaufwärts von dem Schaufelblatt zum Schaufelfuß hin vortritt, und die stromabwärtige Kante des Verbindungsbereichs (47', 47") eine Form aufweist, die konkav verläuft und/oder in Richtung stromabwärts von dem Schaufelblatt zum Schaufelfuß hin zurücktritt,
**dadurch gekennzeichnet, dass**
- die Vorderkante (431', 431") und die Hinterkante (457', 457") des Schaufelblatts jeweils am radial inneren Ende durch eine konkave Form (433', 433"; 432') an die Plattform (16', 16", 16a") anschließen,
- radial nach außen über die konkave Form (433', 433") hinaus die Vorderkante (431', 431") und die Hinterkante (457', 457") des Schaufelblattes jeweils eine konvexe Form aufweisen, und
- die konvexe Form der Vorderkante (453', 453") des Schaufelblatts bauchiger ist als diejenige (459', 459") der Hinterkante des Schaufelblatts.

2. Schaufel nach Anspruch 1,
wobei das stromabwärtige Ende (451', 451") des Schaufelfußes an das radial innere Ende der Hinterkante (457', 457") des Schaufelblatts anschließt, und zwar über die stromabwärtige Kante des Verbindungsbereichs (47', 47"), der einen stromaufwärts gerichteten Absatz (490', 490") aufweist, so dass das radial innere Ende (430', 430") der Hinterkante (432') des Schaufelblatts weiter stromaufwärts liegt als das stromabwärtige Ende des Schaufelfußes.

3. Schaufel nach Anspruch 1 oder 2,
wobei die stromaufwärtige Kante des Verbindungsbereichs (47', 47") zwischen Schaufelblatt und Schaufelfuß eine Form hat, die einen Radius aufweist.

4. Schaufel nach einem der vorhergehenden Ansprüche, wobei
- der bauchigere Bereich des Schaufelblattes an der Vorderkante stromaufwärts vom stromaufwärtigen Ende des Schaufelfußes angeordnet ist, und
- der bauchigere Bereich des Schaufelblattes an der Hinterkante stromabwärts vom stromabwärtigen Ende des Schaufelfußes angeordnet ist.

5. Schaufel nach einem der vorhergehenden Ansprüche, enthaltend:
- eine Auflagefläche (180', 180"), die sich entlang der radialen Erstreckungsrichtung (10) der Schaufel zu einem freien Ende (19') hin erweitert,
- mit einem entlang dieser Richtung verlaufenden Abstand (R) zwischen dem Ausgangspunkt der Auflagefläche (180', 180") und dem freien Ende (19'),
- und mit einem senkrecht zu der radialen Erstreckungsrichtung (10) verlaufenden Abstand (L) zwischen dem stromaufwärtigen Ende (450', 450") des Schaufelfußes (18, 18") und entweder dem radial inneren Ende (430', 430") der Vorderkante des Schaufelblattes oder dem stromabwärtigen Ende des Absatzes (49', 49") des Verbindungsbereichs zwischen dem Schaufelblatt (13', 13") und dem Schaufelfuß (18', 18"), wobei L kleiner oder gleich 2R ist.

6. Schaufel nach einem der vorhergehenden Ansprüche,
**dadurch gekennzeichnet, dass** das stromaufwärtige bzw. stromabwärtige Ende (451', 451") des Schaufelfußes radial außen an die stromaufwärtige bzw. stromabwärtige Kante (491', 491") eines radial inneren Abschnitts des Verbindungsbereichs (47', 47") zwischen dem Schaufelfuß (18', 18") und der inneren Zwischenschaufelplattform (16', 16", 16a") anschließt, und zwar über den stromabwärts gerichteten (49', 49") bzw. stromaufwärts gerichteten (490, 490") Absatz, so dass quer zu der radialen Richtung (10) das stromaufwärtige bzw. stromabwärtige Ende des Schaufelfußes weiter stromaufwärts bzw. stromabwärts liegt als die stromaufwärtige bzw. stromabwärtige Kante (491', 491") des Verbindungsbereichs (47', 47") über seine gesamte Länge.

7. Anordnung, enthaltend:
- Bläserschaufeln für ein Turbotriebwerk, wie ein Turbostrahltriebwerk oder ein Turboproptriebwerk für Flugzeuge, wobei jede Schaufel (12') eine stromaufwärtige Seite und eine stromabwärtige Seite hat und entlang einer radialen Erstreckungsrichtung (10) der Schaufel aufweist:
-- ein Schaufelblatt (13") mit einer Vorderkante entlang der stromaufwärtigen Seite und einer Hinterkante entlang der stromabwärtigen Seite,
-- und einen Schaufelfuß (18") zum Eingriff in eine Nut einer Scheibe des Turbotriebwerks, wobei der Schaufelfuß radial weiter innen als das Schaufelblatt angeordnet ist und ein stromaufwärtiges Ende aufweist,
- innere Zwischenschaufelplattformen (16', 16", 16a"), die jeweils zwischen zwei aufeinanderfolgenden Schaufeln, radial gegenüber einer Ebene eines Verbindungsbereichs (47") jeder Schaufel radial zwischen dem Schaufelfuß (18") und dem Schaufelblatt (13") angeordnet sind, wobei bei den Schaufeln jeweils ein stromaufwärtiges Ende (450") des Schaufelfußes an ein radial inneres Ende der Vorderkante (431") des Schaufelblatts anschließt, und zwar über eine stromaufwärtige Kante des Verbindungsbereichs (47"), der
-- radial zwischen dem Schaufelfuß (18") und der inneren Zwischenschaufelplattform (16', 16", 16a") liegt,
-- einen stromabwärts gerichteten Absatz (49") aufweist,
so dass das radial innere Ende (430") der Vorderkante des Schaufelblatts weiter stromabwärts liegt als das stromaufwärtige Ende des Schaufelfußes,
wobei die stromaufwärtige Kante des Verbindungsbereichs (47") eine konkave Form aufweist, die in Richtung stromaufwärts von dem Schaufelblatt zum Schaufelfuß hin vortritt, und
wobei die stromabwärtige Kante des Verbindungsbereichs (47") eine Form aufweist, die konkav verläuft und/oder in Richtung stromabwärts von dem Schaufelblatt zum Schaufelfuß hin zurücktritt,
**dadurch gekennzeichnet, dass** an jeder Schaufel
- die Vorderkante (431") und die Hinterkante (457") des Schaufelblattes jeweils an ihrem radial inneren Ende über eine konkave Form (433") aneinander anschließen,
- radial nach außen über die konkave Form (433") hinaus die Vorderkante (431") und die Hinterkante (457") des Schaufelblattes jeweils eine konvexe Form aufweisen, und
- die konvexe Form der Vorderkante (453") des Schaufelblattes bauchiger ist als diejenige (459") der Hinterkante des Schaufelblattes.

8. Anordnung nach Anspruch 7,
wobei das stromabwärtige Ende (451") des Schaufelfußes an das radial innere Ende der Hinterkante (457") des Schaufelblattes anschließt, und zwar über die stromabwärtige Kante des Verbindungsbereichs (47"), der einen stromaufwärts gerichteten Absatz (490") aufweist, so dass das radial innere Ende (430") der Hinterkante (432') des Schaufelblattes weiter stromaufwärts liegt als das stromabwärtige Ende des Schaufelfußes.

9. Bläserrotor für ein Turbotriebwerk, wobei der Rotor eine Scheibe (14, 56) enthält, die eine Drehachse umfasst und am Außenumfang im Wesentlichen axial verlaufende Nuten (20, 58) aufweist, in denen Schaufelfüße (18', 18") von Schaufeln angeordnet sind, wobei jede dieser Schaufeln nach einem der Ansprüche 1 bis 6 oder gemäß der Anordnung nach Anspruch 7 oder 8 ausgeführt ist.

10. Rotor nach Anspruch 9,
wobei jede innere Plattform (16', 16", 16a") ein stromaufwärtiges Ende aufweist und sich seitlich auf beiden Seiten eines Schaufelblatts erstreckt, so dass die Plattformen zusammen eine radial innere Begrenzung für eine Gasströmung (21, 144) definieren, die in dem Turbotriebwerk strömen soll, wobei das stromaufwärtige Ende (450', 450") des Schaufelfußes jeder Schaufel weiter stromaufwärts liegt als das stromaufwärtige Ende (160') jeder inneren Plattform.

11. Rotor nach Anspruch 9 oder 10, wobei
- der Schaufelfuß einer Schaufel radial nach innen eine axiale Endkante (19', 19") aufweist, die parallel zur Achse der Nut (20, 58) verläuft, in der sie aufgenommen ist, und
- auf der stromaufwärtigen Seite das stromaufwärtige Ende (450', 450") des Schaufelfußes eine stromaufwärtige Endfläche definiert, die senkrecht zu der Achse steht, entlang der sich die axiale Endkante des Schaufelfußes erstreckt.

12. Turbotriebwerk, wie Turbostrahltriebwerk oder Turboproptriebwerk für Flugzeuge,
**dadurch gekennzeichnet, dass** es mehrere Schaufeln nach einem der Ansprüche 1 bis 6 oder die Anordnung nach Anspruch 7 oder 8 oder den Bläserrotor (100, 100') nach einem der Ansprüche 9 bis 11 umfasst.

## Claims

1. A fan vane for a turbomachine, such as an aircraft turbojet or turboprop, the vane (12', 12') having an upstream side and a downstream side and having, in a radial direction (10) of elongation of the vane:
- a blade (13',13") having a leading edge along the upstream side and a trailing edge along the downstream side,
- a root (18',18") to be engaged in a groove of a disc of the turbomachine, the root being located radially further inside than the blade and having upstream and downstream ends, transversely to said radial direction (10) of elongation,
- an inner inter-vane platform (16) located radially between the root (18',18") and the blade (13',13"),
on which vane, an upstream end (450',450") of the root connects to a radially inner end of the leading edge (431',431") of the blade by an upstream edge of a connecting zone (47',47") which:
-- is radially intermediate between the root (18',18") and the inner inter-vane platform (16',16",16a"), and
-- has a recess towards the downstream (49',49"),
such that said radially inner end (430', 430") of the leading edge of the blade is located further downstream than the upstream end of the root, the upstream edge of said connecting zone (47', 47") having a concave shape which advances upstream from the blade towards the root, and the downstream edge of said connecting zone (47', 47") having a concave shape and/or which moves back downstream, from the blade towards the root,
**characterised in that**:
- the leading edge (431', 431") and the trailing edge (457', 457") of the blade connect to said platform (16', 16", 16a"), each at a radially inner end, by a concave shape (433', 433"; 432'),
- radially outwardly, beyond the concave shape (433', 433"), the leading edge (431',431") and the trailing edge (457', 457") of the blade each have a convex shape, and
- the convex shape of the leading edge (453', 453") of the blade is more rounded than that (459', 459") of the trailing edge of the blade.

2. The vane according to claim 1, wherein the downstream end (451', 451") of the root is connected to the radially inner end of the trailing edge (457', 457") of the blade by the downstream edge of the connecting zone (47', 47") which has a recess towards the upstream (490', 490"), so that the radially inner end (430', 430") of the trailing edge (432') of the blade is located further upstream than the downstream end of the root.

3. The vane according to claim 1 or 2, wherein the upstream edge of the connecting zone (47', 47") between the blade and the root has a shape which has a radius.

4. The vane according to one of the preceding claims, wherein:
- the most rounded area of the blade, at the leading edge, is located upstream of the upstream end of the root, and
- the most rounded area of the blade, at the trailing edge, is located downstream of the downstream end of the root.

5. The vane according to one of the preceding claims having:
- a span (180', 180") which flares towards a free end (19') following said radial direction (10) of elongation of the vane,
- with, in this direction, a distance (R) between the start of the span (180',180") and the free end (19'),
- and, perpendicularly to said radial direction (10) of elongation, a distance L between the upstream end (450', 450") of the root (18', 18") and either said radially inner end (430',430") of the leading edge of the blade, or the downstream end of the recess (49', 49") of said connecting zone between the blade (13',13") and the root (18', 18"), with L less than or equal to 2R.

6. The vane according to one of the preceding claims, **characterised in that** the upstream, respectively downstream (451', 451") end, of the root is connected, in a radially external manner, to the upstream, respectively downstream (491', 491") edge, of a radially internal part of said connecting zone (47', 47") between the root (18', 18") and the inner inter-vane platform (16', 16", 16a"), by said recess towards the downstream (49', 49"), respectively the upstream (490', 490") so that, transversely to said radial direction (10), the upstream, respectively downstream end of the root is located further upstream, respectively downstream than said upstream, respectively downstream (491', 491") edge of said connecting zone (47', 47"), over its entire length.

7. An assembly comprising:
- fan vanes of a turbomachine, such as an aircraft turbojet or turboprop, each vane (12') having an upstream side and a downstream side and having, in a radial direction (10) of elongation of the vane:
-- a blade (13") having a leading edge along the upstream side and a trailing edge along the downstream side,
-- and a root (18") to be engaged in a groove of a disc of the turbomachine, the root being located radially further inside than the blade and having an upstream end,
- inner inter-vane platforms (16', 16", 16a") each interposed between two said successive vanes, radially opposite a level of a connecting zone (47") of each radially intermediate vane between the root (18") and the blade (13") and, on each of which vanes, an upstream end (450") of the root connects to a radially inner end of the leading edge (431") of the blade by an upstream edge of the connecting zone (47") which:
-- is radially intermediate between the root (18") and the inner inter-vane platform (16', 16", 16a"),
-- has a recess towards the downstream (49"), such that said radially inner end (430") of the leading edge of the blade is located further downstream than the upstream end of the root, the upstream edge of said connecting zone (47") having a concave shape which advances upstream from the blade towards the root, and
the downstream edge of said connecting zone (47") having a concave shape and/or which moves back downstream, from the blade towards the root,
**characterised in that**, on each vane:
- the leading edge (431") and the trailing edge (457") of the blade are connected, each at the radially inner end, by a concave shape (433"),
- radially outwardly, beyond the concave shape (433"), the leading edge (431") and the trailing edge (457") of the blade each have a convex shape, and
- the convex shape of the leading edge (453") of the blade is more rounded than that (459") of the trailing edge of the blade.

8. The assembly according to claim 7, wherein the downstream end (451") of the root is connected to the radially inner end of the trailing edge (457") of the blade by the downstream edge of the connecting zone (47") which has a recess towards the upstream (490"), so that the radially inner end (430") of the trailing edge (432') of the blade is located further upstream than the downstream end of the root.

9. A fan rotor for a turbomachine, the rotor comprising a disc (14, 56) having an axis of rotation and having on the outer periphery substantially axial grooves (20, 58) where vane roots (18', 18") are disposed, each of these vanes being according to one of claims 1 to 6 or according to the whole of claim 7 or 8.

10. The rotor according to claim 9, wherein each internal platform (16', 16", 16a") has an upstream end and extends laterally on either side of a blade, such that the platforms together define a radially inner boundary for a gas flow stream (21, 144) to be circulated in the turbomachine, the upstream end (450', 450") of the root of each vane being located further upstream than the upstream end (160') of each internal platform.

11. The rotor according to claim 9 or 10, wherein:
- the root of a vane has radially inwards, an axial end edge (19',19") parallel to the axis of the groove (20, 58) which receives it, and
- on the upstream side, the upstream end (450', 450") of the root defines an upstream end face which is perpendicular to the axis along which said axial end edge of the root extends.

12. A turbomachine, such as an aircraft turbojet or turboprop, **characterised in that** it comprises several vanes according to one of claims 1 to 6, or the whole of claim 7 or 8, or the fan rotor (100, 100') according to one of claims 9 to 11.
